(19) Europäisches Patentamt
European Patent Office
Office européen des brevets

(11) Veröffentlichungsnummer: **0 406 220 A1**


# (12) EUROPÄISCHE PATENTANMELDUNG


(21) Anmeldenummer: **90890190.3**

(22) Anmeldetag: **25.06.90**

(51) Int. Cl.5: **A01G 25/09**, F16L 11/12, F16L 27/12

(30) Priorität: **26.06.89 AT 1563/89**

(43) Veröffentlichungstag der Anmeldung: **02.01.91 Patentblatt 91/01**

(84) Benannte Vertragsstaaten: **BE DE ES FR GB GR IT NL**



(71) Anmelder: **Röhren- und Pumpenwerk Rudolf Bauer Aktiengesellschaft**

**A-8570 Voitsberg, Steiermark(AT)**

(72) Erfinder: **Seebacher, Franz**
**Nepomukgasse 16**
**A-8045 Graz(AT)**
Erfinder: **Schibranji, Hermann**
**Rainweg 8**
**A-8570 Voitsberg(AT)**

(74) Vertreter: **Piso, Eberhard, Dr.**
**Patentanwälte Dipl.-Ing. Herbert C.E. Krause**
**Dr. Eberhard Piso Gluckgasse 1 Postfach 328**
**A-1015 Wien 1(AT)**


## (54) Elastisches Schlitzrohr und Vorrichtung zur Entnahme eines Druckmediums aus einem Schlitzrohr.


(57) Elastisches, mit Verschließelementen verschließbares Schlitzrohr und Vorrichtung zur Entnahme eines Druckmediums aus diesem, wobei das Schlitzrohr (1) einen an seinen Rändern (2a, 2b) prismatisch ausgebildeten Rohrschlitz aufweist, in welchen ein die prismatischen Ränder des Rohrschlitzes vollständig umgreifender Dichtstreifen (3) zum Verschließen des Rohrschlitzes eingelegt ist, das Schlitzrohr an seiner Außenseite im Bereich der prismatischen Ränder je eine in Längsrichtung des Rohrschlitzes verlaufende Nut (5) aufweist und der Dichtstreifen (3) von in die Nuten eingreifenden Verschließelementen (4,6) festgehalten sind. Die Vorrichtung besteht aus einem einen Entnahmeschlitten bildenden, im Schlitzrohr (1) bewegbar angeordneten rohrförmigen ersten Abschnitt (7) und einem durch den Rohrschlitz (5) aus dem Schlitzrohr (1) geführten, mit einem Regner verbindbaren zweiten Abschnitt (8) und am Entnahmeschlitten angeordneten Elementen zum Abheben und Einsetzen des Dichtstreifens (3), wobei dieser durch einen Kanal (10) im ersten Abschnitt (7) geführt ist.

4
5
3
1


FIG. 1a

22
C
9
11
16
15
10
4
3
17
A
13
8
19
7
E
14
12
D
1


FIG. 2

EP 0 406 220 A1

Die Erfindung betrifft ein elastisches, mit Schließelementen verschließbares Schlitzrohr und eine Vorrichtung zur Entnahme eines Druckmediums aus diesem.

Für das Beregnen großer Flächen werden herkömmlicherweise Trommelberegnungsmaschinen verwendet. Dabei müssen einige hundert Meter Rohr mit schweren Maschinen ins Feld gezogen werden, wobei neben einer hohen Bodenverdichtung auch hohe Kosten und ein enormer Zeitaufwand anfallen. Darüberhinaus wird eine riesige Trommel (etwa 5m Durchmesser) mit hohem Eigengewicht und hohe Antriebsleistungen für den Schlaucheinzug benötigt.

Für geradeaus fahrende Beregnungsmaschinen sind auch Vorrichtungen zur kontinuierlichen Wasserentnahme aus einem Schlitzrohr, wie bspw. in der DD-PS 128849 gezeigt, bekannt. Der Rohrschlitz wird dabei von einem an der Innenseite des Rohres angeordneten, über eine Feder an die Wand gepreßten Dichtstreifen verschlossen. Die Beregnungseinrichtung arbeitet quer zur Rohrleitung und ist in Schienen geführt. Die Druckrohrleitung selbst ist mit armiertem Beton ummantelt.

Die FR-PS 2 437 562 zeigt eine auf einem Feld angeordnete, geschlitzte Druckrohrleitung, in welche ein Rohr einer Beregnungsvorrichtung eingreift. Das Schlitzrohr ist dabei über einen größeren Bereich offen. Die Abdichtung erfolgt über Dichtungen an den Enden des in das Schlitzrohr eingreifenden Abnahmerohres. Die quer zum Schlitzrohr verlaufende Beregnungsvorrichtung wird von mehreren Fahrtürmen getragen.

Die FR-A 2 604 862 wiederum zeigt eine Beregnungseinrichtung, welche einen geschlitzten Schlauch verwendet, der an seiner Oberseite mit zwei in Längsrichtung verlaufenden Rippen versehen ist, die Quernuten aufweisen, in welchen mit nietenförmigen Enden versehene Stifte angeordnet sind, welche den Schlauch verschließen. Die Vorrichtung selbst besteht nun aus einem von Rädern getragenen Gestell, das ein das Beregnungswasser zu einer Düse führendes Rohr umfaßt. Dieses Rohr hat an seiner Unterseite einen mit einer Durchgangsöffnung versehenen Rohrstutzen, der mit einem in den Schlauch eingreifenden Längsschiffchen verbunden ist. Zum Öffnen bzw. Verschließen des Schlauches wird eine Kette oder ein Band verwendet, welches Klemmelemente aufweist, mit deren Hilfe die Stifte aus den Nuten gehoben oder in diese gedrückt werden. Die gesamte Vorrichtung ist in ihrem Aufbau sehr kompliziert, globig und damit auch eher reparaturanfällig.

Aufgabe der Erfindung ist es, ein Schlitzrohr und eine dieses verwendende Vorrichtung zu schaffen, welche die oben genannten Nachteile vermeidet und die Beregnung einer großen Fläche ohne aufwendige Konstruktion ermöglicht, Energie spart und den Boden schont.

Die Erfindung löst die Aufgabe dadurch, daß ein Schlitzrohr verwendet wird, bei welchem der Rohrschlitz von eineinander gegenüberliegenden, in Längsrichtung des Rohres verlaufenden, prismatischen Rändern des Schlitzrohres begrenzt ist, in den Rohrschlitz ein auf den prismatischen Rändern satt aufliegender Dichtstreifen zum Verschließen des Rohrschlitzes eingelegt ist, das Schlitzrohr an seiner Außenfläche beiderseits der prismatischen Ränder je eine Nut aufweist und die Verschließelemente mit dem Dichtstreifen fest verbunden sind und in die Nuten eingreifen, um den Dichtstreifen im Rohr festzuhalten.

Ein weiteres Merkmal der Erfindung ist es, daß die Verschließelemente in Abstand zueinander angeordnete Klammern aus Stahl oder einem Elastomer sind.

Ein anderes Merkmal der Erfindung ist es, daß die Verschließelemente eine Kette bildende Kettenglieder sind.

Ein anderes, weiteres Merkmal der Erfindung ist es, daß die Nuten Schwalbenschwanznuten sind.

Die erfindungsgemäße Vorrichtung zur Entnahme eines Druckmediums aus dem erfindungsgemäßen Schlitzrohr, welche aus einem einen Entnahmeschlitten bildenden, im Schlitzrohr bewegbar angeordneten, an jedem seiner Enden mit einem Dichtring versehenen rohrförmigen, ersten Abschnitt und einem durch den Rohrschlitz aus dem Schlitzrohr geführten, mit einem Regner verbindbaren zweiten Abschnitt besteht, der einen Kanal zur Durchführung der Verschließelemente umfaßt, ist dadurch gekennzeichnet, daß der Entnahmeschlitten an seinem zweiten Abschnitt einen sich in Längsrichtung des Schlitzrohres erstreckenden Rahmen umfaßt, an welchem sämtliche Elemente zum Abheben und Einsetzen des Dichtstreifens angeordnet sind.

Ein anderes Merkmal der Erfindung ist es, daß der Entnahmeschlitten aus Kunststoff, Aluminium, rostfreiem Stahlgruß oder einer Stahlkonstruktion besteht und daß der Rahmen am Entnahmeschlitten mit Befestigungsmitteln angeordnet ist.

Ein weiteres Merkmal der Erfindung ist es, daß der Entnahmeschlitten und der Rahmen einstückig ausgebildet sind.

Weiters ist es erfindungsgemäß, daß jede Dichtung durch eine mittels Schrauben am ersten Abschnitt befestigten Klemmring fixiert ist.

Ein weiteres, anderes Merkmal der Erfindung ist es, daß im Bereich des Überganges vom ersten in den zweiten Abschnitt zu beiden Seiten des zweiten Abschnittes je eine um eine senkrecht zur Vorschubrichtung des Entnahmeschlittens liegende waagrechte Achse drehbare Abhebrolle an der Unterseite des Rahmens angeordnet ist, daß der zweite Abschnitt ein flanschförmig ausgeführter Entnahmestutzen ist, durch dessen in Rohrlängsrichtung verlaufenden Kanal der abgehobene Dichtstreifen geführt ist und daß das flanschförmige Ende des Entnahmestutzens mit Bohrungen versehen ist.

Die erfindungsgemäße Vorrichtung ist auch dadurch gekennzeichnet, daß an den beiden äußeren Enden des Rahmens je eine in Achsrichtung des Schlitzrohres drehbare Anpreßrolle und hinter jeder Anpreßrolle in Richtung zum Entnahmestutzen zu beiden Seiten der Anpreßrolle je eine zu dieser senkrecht rotierende Walze in die Nut im Schlitzrohr eingreift und dem Abheben bzw. Einsetzen der vom Dichtstreifen getragenen Verschließelemente dient.

Ein abschließendes Merkmal der Erfindung ist es, daß der erste Abschnitt des Entnahmeschlittens in jedem im Schlitzrohr angeordneten Endbereich deiner in den ersten Abschnitt schwenkbaren Klappe versehen ist, welche in ihrer ungeschwenkten Stellung die Endbereiche verschließen.

Die Erfindung wird nun anhand eines Ausführungsbeispieles unter Zuhilfenahme der angeschlossenen Zeichnung näher beschrieben.

Es zeigen:

- Fig. 1a, 1b Ausführungsformen des erfindungsgemäßen Schlitzrohres;
- Fig. 2 einen Längsschnitt durch die in das Schlitzrohr nach Fig. 1 eingesetzte erfindungsgemäße Vorrichtung;
- Fig. 3 einen Schnitt entlang der Linie A-B in Fig. 2;
- Fig. 4 einen Schnitt entlang der Linie C-D in Fig. 2;

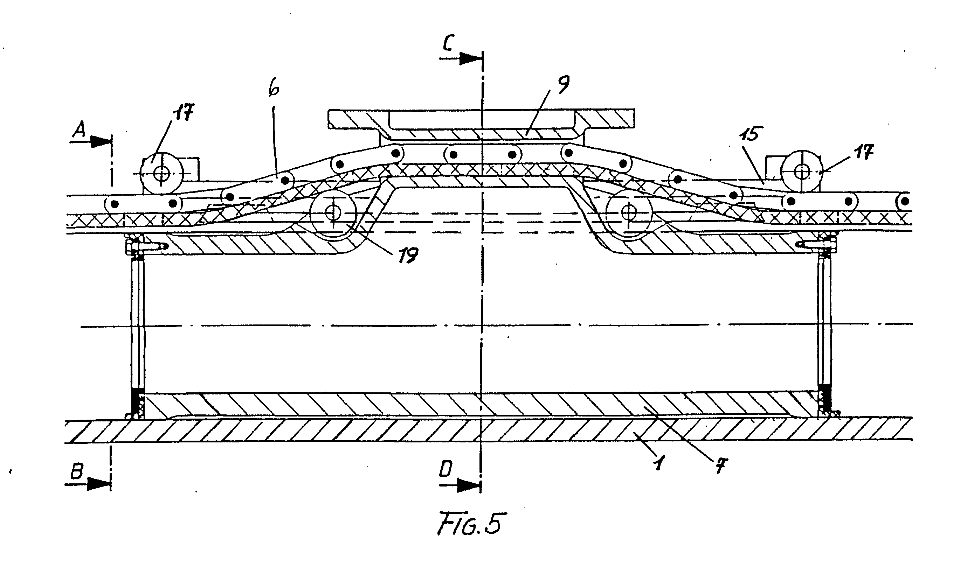

- Fig. 5 eine zweite Ausführungsform der erfindungsgemäßen Vorrichtung in einem Längsschnitt;
- Fig. 6 einen Schnitt entlang der Linie A-B in Fig. 5;

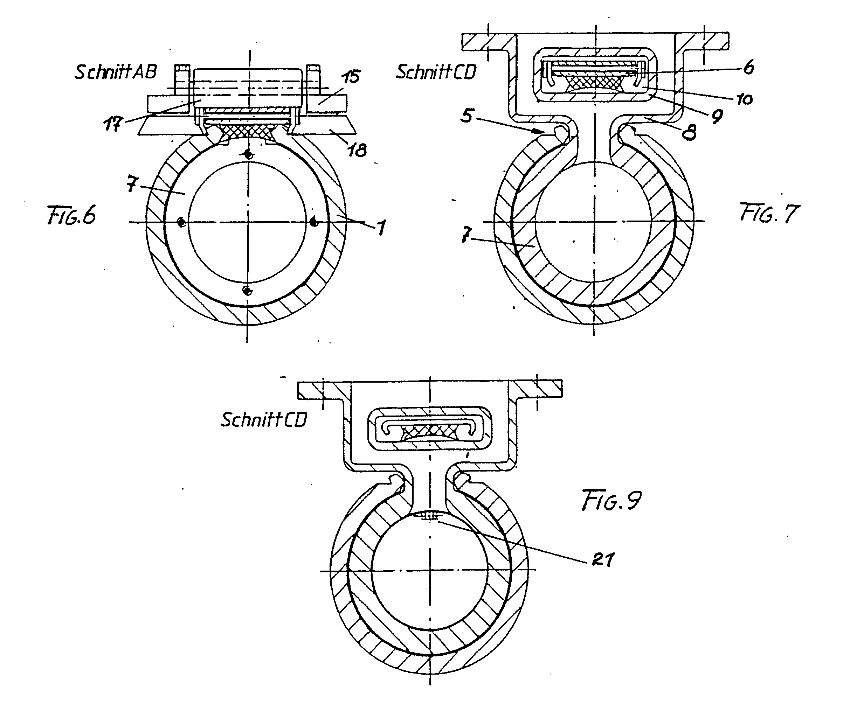

- Fig. 7 einen Schnitt entlang der Linie C-D in Fig. 5;
- Fig. 8 einen Längsschnitt durch eine weitere Ausführungsform der erfindungsgemäßen Vorrichtung; und
- Fig. 9 einen Schnitt entlang der Linie C-D in Fig. 8.

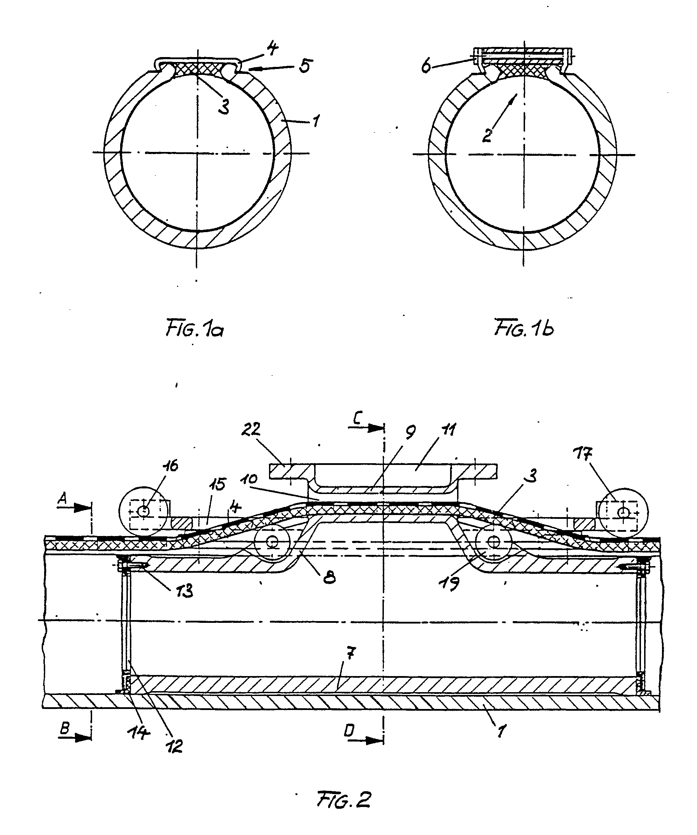

Das aus elastischem Material, bspw. Elastomer, federndem Stahl usw. bestehende Schlitzrohr (1) weist über seine gesamte Länge einen mit prismatischen Rändern (2a, 2b) versehenen Rohrschlitz (2) auf. Die Ränder (2a, 2b) dienen als Dichtkanten. In den Rohrschlitz (2) ist ein entsprechend ausgebildeter Dichtstreifen (3), der die prismatischen Rändern vollständig umgreift, eingelegt. Der Dichtstreifen (3) ist mittels in Abstand zueinander angeordneten, mit ihm verbundenen Klammern (4) in beiderseits des Rohrschlitzes (2) an der Außenseite des Schlitzrohres (1) verlaufenden Nuten (5) fixiert (Fig. 1a).

Diese Nuten (5) sind vorzugsweise als Schwalbenschwanznuten ausgebildet.

Zum Fixieren des Dichtstreifens (3) kann neben den Klammern (4), welche beispielsweise aus Stahl oder Elastomer sein können, in einer anderen Ausführungsform auch eine aus Kettengliedern (6) bestehende Kette dienen (Fig. 1b). Das derart gestaltete Rohr ist also gegenüber dem vorzugsweise Druckwasser dicht und verhindert das Eindringen von äußeren Medien in das Rohr.

In dieses Schlitzrohr greift nun eine Vorrichtung zur Entnahme des transportierten Mediums ein, welche im Schlitzrohr bewegt werden kann, um die Entnahme des Mediums auch an jeder beliebigen Stelle gewährleisten zu können.

Die Vorrichtgung umfaßt einen rohrförmigen, im Schlitzrohr bewegbaren ersten Abschnitt (7) und einen an diesen anschließenden, durch den Rohrschlitz (2) aus dem Schlitzrohr (1) geführten zweiten Abschnitt (8). Dieser Abschnitt ist als Entnahmestutzen mit flanschförmigem Ende ausgebildet. Die beiden Abschnitte (7, 8) bilden einen Entnahmeschlitten für das im Schlitzrohr transportierte Medium.

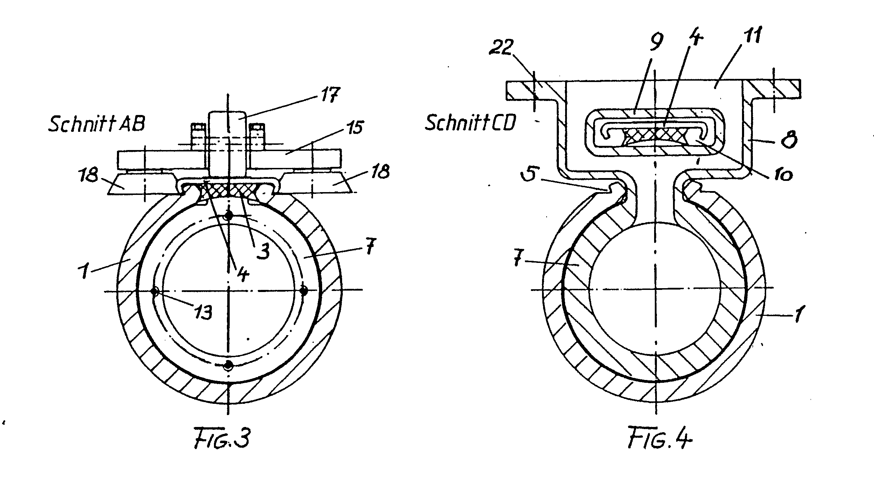

Der zweite Teil (8) des Entnahmeschlittens ist in Achsrichtung des Schlitzrohres von einem Hohlteil (9) durchsetzt, der einen Kanal (10) zum Durchführen des Dichtstreifens (3) mit den auf ihm angeordneten Klammern (4) oder Kettengliedern (6) durch den Entnahmestutzen ermöglicht. Das zu entnehmende Medium kann unterhalb und seitlich des Hohlteiles in den freien Raum (11) nach oben strömen (Fig. 4).

Der rohrförmige erste Abschnitt des Entnahmeschlittens ist an jedem seiner Endbereiche mit einer Dichtung (12) versehen, welche mittels eines über Schrauben (13) am Entnahmeschlitten befestigten Klemmring (14) fixiert ist. Damit ist der Austritt von Medium aus dem Schlitzrohr ausschließlich im Bereich (11) garantiert.

Für eine Bewegung des Entnahmeschlittens im Schlitzrohr (1) muß dieses geöffnet bzw. wieder verschlossen werden können, ohne daß Wasser an ungewünschten Stellen das Rohr verlassen kann. Zu diesem Zweck ist an beiden Seiten des Entnahmeschlittens (7, 8) in Längsrichtung des Rohres ein Rahmen (15) angeordnet, der die Elemente zum Abheben und Einsetzen des Dichtstreifens umfaßt. Am äußeren Ende jedes Rahmens (15) ist eine um eine senkrecht zur Vorschubrichtung des Entnahmeschlittens liegende waagrechte Achse (16) drehbare Anpreßrolle (17) angeordnet. Der Dichtstreifen (3) mit den entsprechenden Verschließelementen durchläuft beim Eintritt in den Entnahmeschlitten zuerst diese Rolle (17) und dann zwei senkrecht zur Anpreßrolle und beiderseits in Richtung zum Entnahmestutzen (8) angeordnete rotierende Walzen (18), welche das Schlitzrohr im Bereich der in den Nuten (5) gehaltenen Verschließelemente (4,6) zusammendrückt und den Dichtstreifen (3) somit freisetzt, d.h. aus dem Rohrschlitz löst. Der Dichtstreifen läuft in der Folge über eine in Richtung der Anpreßrolle rotierende Abheberolle (19), welche unterhalb des Rahmens (15) im Übergang des ersten in den zweiten Abschnitt der Entnahmevorrichtung angeordnet ist. Der Dichtstreifen kann nun durch den Kanal (10) im Entnahmestutzen (8) geführt werden und wird äquivalent dem Abhebevorgang wieder in das Schlitzrohr eingesetzt, indem er am Rahmen symmetrisch zur Eintrittsseite angeordnete, oben genannte Elemente an der Austrittsseite durchläuft (Fig. 2).

Die Vorrichtung besteht vorzugsweise aus Kunststoff, Aluminium, rostfreiem Stahl oder auch aus einer Schweißkonstruktion. Der Rahmen (15) kann am Entnahmeschlitten beispielsweise angeschraubt, angeschweißt oder mit ihm einstückig ausgebildet sein.

Der Entnahmeschlitten kann von außen her im Schlitzrohr (1) gezogen werden, wodurch eine Entnahme des Mediums an jeder beliebigen Stelle möglich ist.

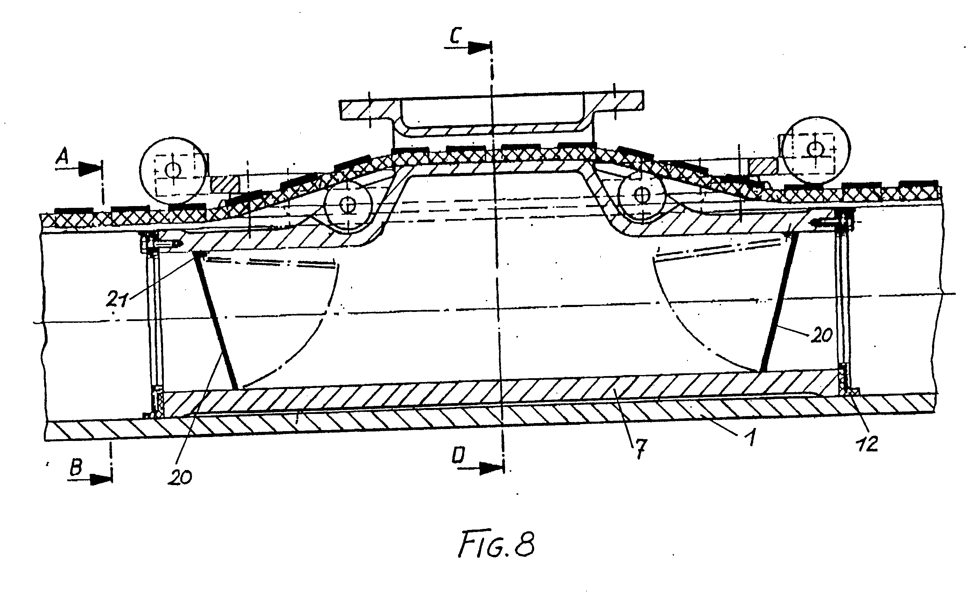

Nach einer besonders vorteilhaften Ausführungsform (Fig. 8) ist der Entnahmeschlitten mit einem Klappensystem versehen, wobei in jedem Endbereich des zylindrischen ersten Abschnittes (7) je eine Klappe (20) angeordnet ist. Jede dieser Klappen ist über ein an der Oberseite des ersten Abschnittes angeordnetes Gelenk (21) in diesen schwenkbar (strichliert dargestellt).

Wird nun das Schlitzrohr (1) von einem Medium in einer Richtung durchströmt, so öffnet jeweils eine Klappe, während die andere dichtet, zufolge der einseitig, in Gegenrichtung schwenkbaren Klappen. Die Vorrichtung erfährt so eine Selbstbewegung.

Der Stativschlitten wird bei dieser Ausführung direkt angekuppelt oder der Regner direkt auf den Flansch aufgesetzt. Der Flansch ist dazu mit Bohrungen (22) versehen.

Ein Ziehen des Entnahmeschlittens und damit oft aufwendige Einrichtungen entfallen, die Vorrichtung ist also ein "Selbstfahrer".

Die oben beschriebene Vorrichtung erspart somit das Einfahren in das Feld, um dieses zu beregnen.

Die besonderen, daraus resultierenden Vorteile sind Energieersparnis und Schonung des Bodens.

## Ansprüche

1. Elastisches, mit Verschließelementen verschließbares Schlitzrohr, dadurch gekennzeichnet, daß der Rohrschlitz (2) von einander mit Abstand gegenüberliegenden, in Längsrichtung des Rohres verlaufenden, prismatischen Rändern (2a, 2b) des Schlitzrohres (1) begrenzt ist, daß in den Rohrschlitz (2) ein auf den prismatischen Rändern satt aufliegender Dichtstreifen (3) zum Verschließen des Rohrschlitzes eingelegt ist, daß das Schlitzrohr an seiner Außenfläche beiderseits der prismatischen Kanten je eine Nut (5) aufweist und daß die Verschließelemente (4,6) mit dem Dichtstreifen (3) fest verbunden sind und in die Nuten (5) eingreifen, um den Dichtstreifen im Rohr (1) festzuhalten.

2. Schlitzrohr nach Anspruch 1, dadurch gekennzeichnet, daß die Verschließelemente in Abstand zueinander angeordnete Klammern sind.

3. Schlitzrohr nach Anspruch 2, dadurch gekennzeichnet, daß die Klammern aus Stahl sind.

4. Schlitzrohr nach Anspruch 2, dadurch gekennzeichnet, daß die Klammern aus einem Elastomer sind.

5. Schlitzrohr nach Anspruch 1, dadurch gekennzeichnet, daß die Verschließelemente eine Kette bildende Kettenglieder (6) sind.

6. Schlitzrohr nach Anspruch 1, dadurch gekennzeichnet, daß die Nuten (5) Schwalbenschwanznuten sind.

7. Vorrichtung zur Entnahme eines Druckmediums aus einem Schlitzrohr nach den Ansprüchen 1-6, wobei die Vorrichtung aus einem einen Entnahmeschlitten bildenden, im Schlitzrohr bewegbar angeordneten, an jedem seiner Enden mit einem Dichtring versehenen, rohrförmigen ersten Abschnitt und einem durch den Rohrschlitz aus dem Schlitzrohr geführten, mit einem Regner verbindbaren zweiten Abschnitt besteht, der einen Kanal zur Durchführung der Verschließelemente umfaßt, dadurch gekennzeichnet, daß der Entnahmeschlitten an seinem zweiten Abschnitt (8) einen sich in Längsrichtung des Schlitzrohres erstreckenden Rahmen (15) umfaßt, an welchem sämtliche Elemente zum Abheben und Einsetzen des Dichtstreifens (3) angeordnet sind.

8. Vorrichtung nach Anspruch 7, dadurch gekennzeichnet, daß der Entnahmeschlitten aus Kunststoff, Aluminium , rostfreiem Stahlguß oder einer Schweißkonstruktion besteht.

9. Vorrichtung nach Anspruch 7, dadurch gekennzeichnet, daß der Rahmen (15) am Entnahmeschlitten mit Befestigungsmitteln angeordnet ist.

10. Vorrichtung nach Anspruch 7, dadurch gekennzeichnet, daß der Entnahmeschlitten und der Rahmen einstückig ausgebildet sind.

11. Vorrichtung nach Anspruch 7, dadurch gekennzeichnet, daß jede Dichtung (12) durch einen mittels Schrauben (13) am ersten Abschnitt (7) befestigten Klemmring (14) fixiert ist.

12. Vorrichtung nach Anspruch 7, dadurch gekennzeichnet, daß im Bereich des Überganges vom ersten in den zweiten Abschnitt zu beiden Seiten des zweiten Abschnittes (8) je eine um eine senkrecht zur Vorschubrichtung des Entnahmeschlittens liegende, waagrechte Achse (17) drehbare Abhebrolle (11) an der Unterseite des Rahmens (15) angeordnet ist.

13. Vorrichtung nach Anspruch 7, dadurch gekennzeichnet, daß der zweite Abschnitt ein flanschförmig ausgeführter Entnahmestutzen ist, durch dessen in Rohrlängsrichtung verlaufenden Kanal (10) der abgehobene Dichtstreifen geführt ist.

14. Vorrichtung nach Anspruch 13, dadurch gekennzeichnet, daß das flanschförmige Ende des Entnahmestutzens mit Bohrungen (22) versehen ist.

15. Vorrichtung nach Anspruch 7, dadurch gekennzeichnet, daß an den beiden äußeren Enden des Rahmens (15) je eine in Achsrichtung des Schlitzrohres drehbare Anpreßrolle (17) und hinter jeder Anpreßrolle in Richtung zum Entnahmestutzen zu beiden Seiten der Anpreßrolle je eine zu dieser senkrecht rotierende Walze (18) in die Nut (5) im Schlitzrohr eingreift und dem Abheben bzw. Einsetzen der vom Dichtstreifen (3) getragenen Verschließelemente dient.

16. Vorrichtung nach Anspruch 7, dadurch gekennzeichnet, daß der erste Abschnitt des Entnahmeschlittens in jedem im Schlitzrohr angeordneten Endbereich mit einer in den ersten Abschnitt schwenkbaren Klappe (20) versehen ist, welche in ihrer ungeschwenkten Stellung die Endbereiche verschließen.

4
5
3
1

FIG. 1a

6
2

FIG. 1b

C
22
9
11
17
16
15
10
3
A
4
13
8
19
7
B
14
12
D
1

FIG. 2

Schnitt CD
11
8
10
4
9
1
22
5
7
FIG. 4
Schnitt AB
17
15
18
7
3
4
13
18
1
FIG. 3

17
15
9
C
D
19
6
17
A
B
7
1
FIG.5

FIG. 7
Schnitt CD
6
10
9
8
5
7
FIG. 6
Schnitt AB
15
18
1
17
7
FIG. 9
Schnitt CD
21

12
20
1
7
C
D
20
21
A
B
FIG. 8

Europäisches Patentamt

# EUROPÄISCHER RECHERCHENBERICHT

Nummer der Anmeldung

EP 90890190.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| D,A | FR - A1 - 2 604 862 (DI PALMA) * Gesamt * -- | 1,7, 13,14 | A 01 G 25/09<br>F 16 L 11/12<br>F 16 L 27/12 |
| D,A | FR - A - 2 437 562 (LINDSAY MANUFACTURING COMPANY) * Gesamt * -- | 1,7 | |
| A | GB - A - 1 416 674 (DOMINIC) * Seite 2, Zeilen 81-104; Seite 10, Zeile 22 - Seite 11, Zeile 2; Fig. 15-26b * -- | 1,7 | |
| A | SU - A1 - 1 436 943 (MOSKOVSKAJA SELSKOKHOZYAJSTVENNAYA AKADEMIYA) * Gesamt * -- | 1,7 | |
| A | SU - A1 - 1 335 200 (OPITNO-KONSTRUKTORSKOJE BJURO VSJESOJUSNOWA NAUTSCHNA - ISSLEDOWATELSKOWA INSTITUTA GIROTECHNIKU) ---- | | RECHERCHIERTE SACHGEBIETE (Int Cl.⁵)<br>A 01 G 25/00<br>B 05 B<br>F 16 L |

Der vorliegende Recherchenbericht wurde für alle Patentansprüche erstellt.

| Recherchenort | Abschlußdatum der Recherche | Prüfer |
|---|---|---|
| WIEN | 14-08-1990 | FESSLER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82